# EUROPEAN PATENT SPECIFICATION

(11) **EP 1 486 112 B1**
(45) Date of publication and mention of the grant of the patent: **13.08.2008**
(21) Application number: 03101698.3
(22) Date of filing: 11.06.2003
(51) Int. Cl.: A01G 9/02

(54) **Package for transporting and growing plant material, such as seeds or bulbs**
Packung für den Transport und die Kultur von Pflanzenmaterial wie Samen oder Zwiebeln
Conditionnement pour le transport et la culture de la substance végétale, tel que des semences ou des bulbes

(43) Date of publication of application: 15.12.2004
(73) Proprietor: Wijers, Jozef Vincent Maria, 1075 KM Amsterdam (NL)
(72) Inventor: Wijers, Jozef Vincent Maria, 1075 KM Amsterdam (NL)
(74) Representative: de Vries, Johannes Hendrik Fokke

(56) References cited:
- WO-A-00/64760
- DE-A- 4 009 463
- FR-A- 2 649 582
- US-A- 3 664 062
- PATENT ABSTRACTS OF JAPAN vol. 1998, no. 03, 27 February 1998 (1998-02-27) & JP 09 298949 A (NAGOSHI HIDEO), 25 November 1997 (1997-11-25)

## Description

The present invention relates to a package for transporting and growing plant material, such as seeds or bulbs.

Packages for plant material are known in many varieties. In some embodiments, the packages can also be used for growing the plant material due to their nice appearance. US-A-5,239,774 relates to a planter system with change-configuration, pop-out imitator structure. The system includes a container containing planting soil and a seed packet. The container is surrounded by a jacket including a sleeve extending snugly around the container and a pop-out structure which can be folded-out to imitate a structure like a teapot or watering can when the system is used as a growing container.

A further package is known from JP 09-298949. This document disclose a seedling moving/growing set capable of making a plant producer to uniformly raise a large amount of seedlings, shipping and transporting the seedlings in a raised state as it is and making a consumer use and grow the plants in a transported state as it is. The set comprises a cover, a sheet-like material, a hydrous medium containing the seedlings and a container for housing them.

It is an object of the present invention to provide a new kind of package which is easy to use and which offers new possibilities.

To obtain this object, the invention provides a package for transporting and growing plant material, such as seeds or bulbs, comprising:
one or more inserts containing a plurality of cavities for taking up feeding material and plant material, and
a casing which covers at least a part of the insert for transport,
wherein the package comprises at least one openable cover to uncover the cavities in order to transform the package into a growing tray, and
wherein the casing encloses the insert, and has openable portions therein coinciding at least partly with the cavities and forming at least a part of the openable cover.

Due to the features of the invention, it is possible to transport and grow several plants in an insert, such as a tray, so that the package can provide a small "garden" when it is used for growing. Generally, the transformation from a package into a growing tray is easy by uncovering the cavities. It is favourable that the casing encases the insert, since this offers the best protection of the plant material during storage and transport. The casing has openable portions therein coinciding at least partly with the cavities and forming at least a part of the openable cover. In this way only some portions have to be removed or opened in order to transform the package into a growing container. Such transformation is very easy if the openable portions are peel off labels connected to the package through tear lines.

In one embodiment, the casing is a cardboard box which may be folded from a plano and may be provided with a grip. This results in a simple package which is easy to handle during transport.

In order to provide an attractive appearance especially during use, the casing is provided with a garden decoration at least at the side facing the cavities, and preferably also at the sides in the case of a box-like structure. The outer side of the package may be plasticized in order to be water resistant and to offer a better protection against environmental influences.

It is an advantage if the one or more inserts are water tight at least around the cavities which are sealed by seal covers connected to the one or more inserts and forming at least a part of the openable cover.

In this manner, the feeding and plant material is protected during storage and transport by simple means. No water can enter the cavity so that the plant material is prevented from starting to grow prematurely. By sealing the insert itself, it is not necessary to seal the casing for protecting the plant material. The closed seal of the cavities makes the package suitable for export to any place in the world and provides a long shelf-life.

Further details and advantages of the invention will be explained in the following description of the drawings schematically showing an embodiment of the invention by way of example.
Fig. 1 is a bottom view of the casing of the package according to the invention, in an open-folded condition before use.
Fig. 2 is a plan view of the insert of the package of Fig. 1, on a larger scale.
Fig. 3 is a plan view of the open casing of Fig. 1 with the insert of Fig. 2 placed therein.
Fig. 4 is a plan view similar to that of Fig. 3, but with the insert filled and sealed.
Fig. 5 is a perspective view of the package in its storage and transport condition.
Fig. 6 - 10 are perspective views of the package in various conditions in order to illustrate the use of the package.

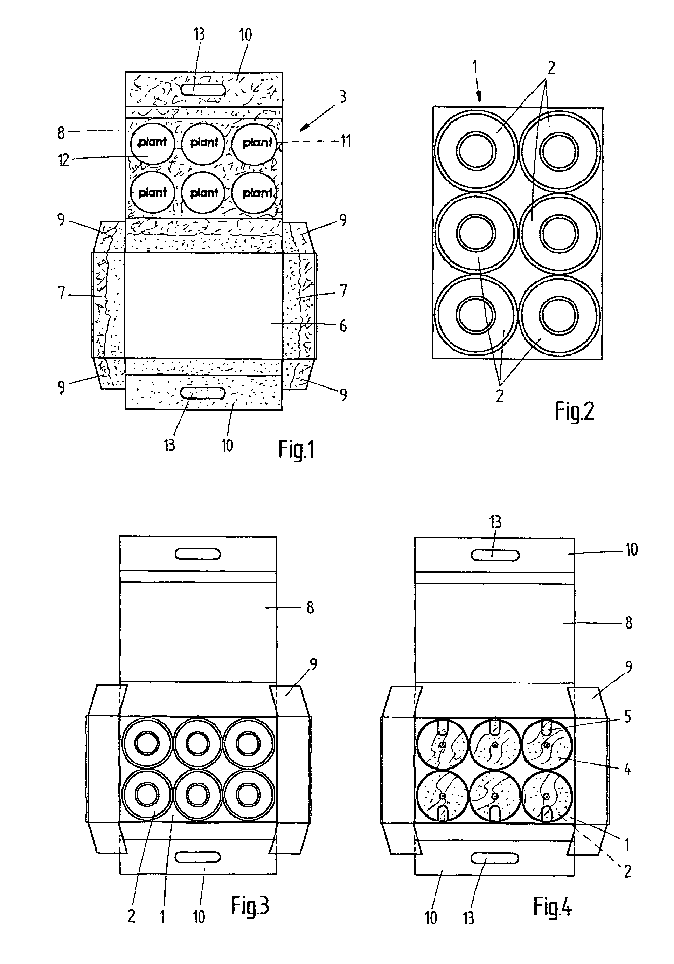

The drawings, and in first instance Figs. 1 - 5 thereof, show a package for storing, transporting and growing plant material. This plant material may consist of any kind of starting material from which flowers, plants, herbs or the like may grow. The starting material may for example be bulbs, seeds, or other germs.

The package includes an insert 1 having cavities 2, and a casing 3 enclosing the insert 1, in this embodiment completely. The insert 1 is in this case a plastic tray having a plurality, here six, cavities 2. Such tray is conventional for use as open storage and transport tray for soil and plants. Of course, a smaller and larger number of cavities is conceivable,which may be arranged in one of more rows or the like. The insert 1 may be an integral structure or may comprise several parts. For example, each cavity may be provided in a separate insert part.

Each cavity 2 is closed at its bottom and side and is open at the upper side. The cavity is adapted to receive feeding material, such as water, substrate or soil, which may be any kind of substrate or soil, also substrate or soil that is dried and pressed and that swells upon contact with water. The plant material is preferably put in the soil and be ready for use, but may also be packed separately and be prepared by the user when the growing process is started. After the feeding and plant material is placed in the cavities 2, the cavities 2 are sealed by means of foil material forming plastic seal covers 4 (Fig. 4), which are fixed to the upper side of the insert 1. Conveniently, the seal covers 4 comprise pull lips 5 with which the seal covers are easily removed.

The casing 3 is in this case a plasticized cardboard box, made from a piano. It includes a bottom 6, sides 7, a top cover 8, fixing flaps 9 and grip parts 10. The outer side of the casing contains a decoration, in this case a photographic image to imitate a garden. In this particular case, the casing looks like a piece of turf, with grass at the upper side and roots at the lower side.

The top cover 8 contains six perforated tear lines 11 surrounding a peel off label 12 forming a removable portion of the top cover 8. Each label 12 substantially coincides with a corresponding cavity 2. The labels 12 may be used for imprints, which will not interfere with the garden look, since the peel off labels will be removed before use as a growing tray. The labels may, for example, also be provided with a photographic image of the flower or plant that will grow out of the underlying cavity.

When the casing 3 is closed during the manufacturing process, the grip parts 10 are fixed to each other side by side with their grip openings 13 coinciding. There is printed a cutting line 14 on the grip parts at a position where the grip can be cutoff before use as a growing tray. The interconnection of the various parts of the cardboard box forming the casing 3 is not broken by the removal of the grip parts 10.

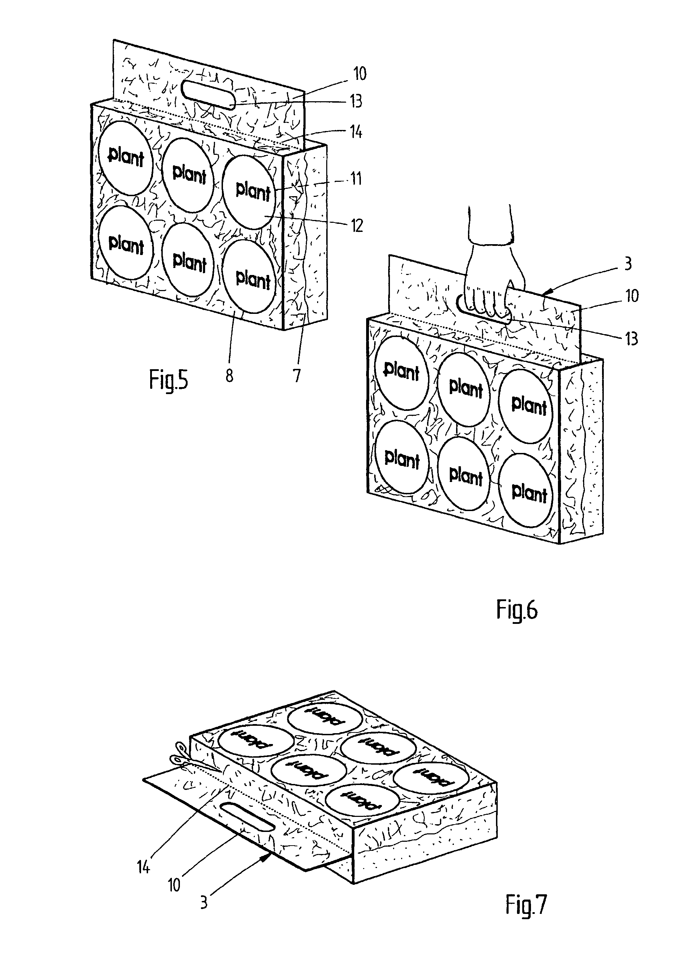

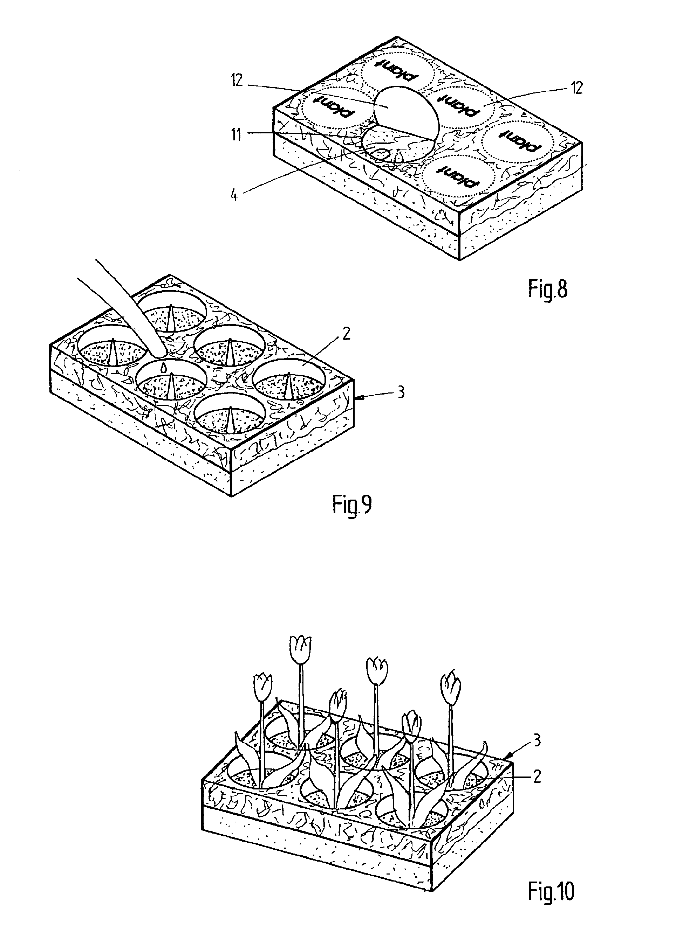

Figs. 6 - 10 illustrate the method of use of this embodiment of the package according to the invention. Fig. 6 shows how the package may be easily transported by using the grip 10, 13. In Fig. 7, it is shown that the grip parts 10 are cut off at the position of the cutting line 14 in order to prepare the package for its growing tray function. In Fig. 8, the labels 12 are removed in order to provide openings in the casing coinciding with the upper sides of the corresponding cavities. After the labels 12 have been removed, the pull lips 5 of the seal covers 4 are accessible, so that the seal covers 4 can be removed as well. The package is now ready for use as a growing tray. If water is added to the soil, as is illustrated in Fig. 9, the plant material, in this case the bulbous flowers, will start to develop, eventually leading to the condition of Fig. 10 in which there is created a small "flower garden" for home use.

From the foregoing it will be clear that the invention provides a package for transporting and growing plant material which is very convenient to handle and use during storage and transport, and is very conveniently transformed into a growing tray offering an attractive appearance.

The invention is not restricted to the above-described embodiment shown in the drawing, which may be varied in several ways without departing from the scope of the invention.

For example, the casing may surround the insert only partially. Furthermore, the casing may be opened in another way to uncover the cavities, for example by removing the whole top cover of the casing. It may also be open from the start as long as the cavities are covered in another way, for example by their seal covers. It may also be such that it is the casing that seals the cavities, that is without the use of separate seal covers. In that case, for example, the peel off labels of the casing seal the cavities in the insert. The casing and insert may also have other shapes or structures or may be made of other material. It is also conceivable that the insert comprises a liner and separate containers which are placed in cavities in the liner. The containers are generally sealed at their upper end, but the bottom may be either closed or, in circumstances, provided with drain holes, to allow water to drain from the container into the water tight liner. In case seeds or the like are used as plant material, they may be packed in paper bags within the soil. This paper bag will decay if it comes in contact with water.

## Claims

1. A package for transporting and growing plant material, such as seeds or bulbs, comprising:
one or more inserts (1) containing a plurality of cavities (2) for taking up feeding material and plant material, and
a casing (3) which covers at least a part of the insert for transport,
wherein the package comprises at least one openable cover (4, 12) to uncover the cavities (2) in order to transform the package into a growing tray, and
wherein the casing (3) encloses the insert (1), and has openable portions (12) therein coinciding at least partly with the cavities (2) and forming at least a part of the openable cover.

2. The package according to claim 1, wherein the openable portions (12) are peel off labels connected to the casing (3) through tear lines (11).

3. The package according to one of the preceding claims, wherein the casing (1) is a cardboard box.

4. The package according to one of the preceding claims, wherein the box forming the casing (1) is folded from a plano.

5. The package according to one of the preceding claims, wherein the casing (1) is provided with a grip (10, 13).

6. The package according to one of the preceding claims, wherein the casing (1) is provided with a garden decoration at least at the side (top cover 8) facing the cavities (2).

7. The package according to one of the preceding claims, wherein the casing (1) is plasticized.

8. The package according to one of the preceding claims, wherein the one or more inserts (1) are water tight at least around the cavities (2) which are sealed by seal covers (4) connected to the one or more inserts (1) and forming at least a part of the openable cover (4).

9. The package according to one of the preceding claims, wherein the plant material consists of flower bulbs.

## Patentansprüche

1. Packung zum Transportieren und Kultivieren von pflanzlichem Material wie Samen oder Zwiebeln, aufweisend: einen oder mehrere Einsätze (1), die eine Mehrzahl an Hohlräumen (2) zum Aufnehmen von Nährmaterial und von pflanzlichem Material aufweisen, und
ein Gehäuse (3), das mindestens einen Teil des Einsatzes (1) zum Transport abdeckt,
wobei die Packung mindestens eine sich öffnen lassende Abdeckung (4, 12) zum Bloßlegen der Hohlräume (2) aufweist, um die Packung in einen Kultivierkasten zu verwandeln, und
wobei das Gehäuse (3) den Einsatz (1) einfasst und sich öffnen lassende Teile (12) hat, die zumindest teilweise mit den Hohlräumen (2) übereinstimmen, und mindestens einen Teil der sich öffnen lassenden Abdeckung bildet.

2. Packung gemäß Anspruch 1, wobei die sich öffnen lassenden Teile (12) abziehbare Aufkleber sind, die mit dem Gehäuse (3) durch Abreißlinien (11) verbunden sind.

3. Packung gemäß einem der vorangehenden Ansprüche, wobei das Gehäuse (3) ein Karton ist.

4. Packung gemäß einem der vorangehenden Ansprüche, wobei das Behältnis, das das Gehäuse (3) bildet, aus einem flachen Zuschnitt gefaltet ist.

5. Packung gemäß einem der vorangehenden Ansprüche, wobei das Gehäuse (3) mit einem Griff (10, 13) versehen ist.

6. Packung gemäß einem der vorangehenden Ansprüche, wobei das Gehäuse (3) mindestens an der Seite (Top-Abdeckung 8), die den Hohlräumen (2) gegenübersteht, mit einer Gartendekoration versehen ist.

7. Packung gemäß einem der vorangehenden Ansprüche, wobei das Gehäuse (3) plastifiziert ist.

8. Packung gemäß einem der vorangehenden Ansprüche, wobei der eine oder die mehreren Einsätze (1) mindestens um die Hohlräume (2) herum wasserdicht sind, welche durch Versiegelungs-Abdeckungen (4) abgedichtet sind, die mit dem einen oder den mehreren Einsätzen (1) verbunden sind und die mindestens einen Teil der sich öffnen lassenden Abdeckung (4) bilden.

9. Packung gemäß einem der vorangehenden Ansprüche, wobei das pflanzliche Material aus Blumenzwiebeln besteht.

## Revendications

1. Conditionnement pour le transport et la culture de produits végétaux tels que des semences ou des bulbes, comprenant :
un ou plusieurs éléments rapportés (1) qui contiennent plusieurs cavités (2) destinées à recevoir un produit nutritif et un produit végétal, et
un boîtier (3) qui couvre une partie au moins dudit élément rapporté, pour le transport,
le conditionnement ayant au moins un couvercle (4, 12) apte à être ouvert pour dégager les cavités (2) afin de transformer le conditionnement en plateau de culture, et
le boîtier (3) enveloppant l'élément (1) et présentant des parties aptes à être ouvertes (12) qui coïncident au moins en partie avec les cavités (2) et qui forment au moins une partie du couvercle apte à être ouvert.

2. Conditionnement selon la revendication 1, dans lequel les parties aptes à être ouvertes (12) sont constituées par des étiquettes à déchirer qui sont reliées au boîtier (3) par des lignes d'arrachement (11).

3. Conditionnement selon l'une des revendications précédentes, dans lequel le boîtier (3) est constitué par une boîte en carton.

4. Conditionnement selon l'une des revendications précédentes, dans lequel la boîte qui forme le boîtier (3) est pliée à partir d'une boîte plane.

5. Conditionnement selon l'une des revendications précédentes, dans lequel le boîtier (3) est pourvu d'une poignée (10, 13).

6. Conditionnement selon l'une des revendications précédentes, dans lequel le boîtier (3) est pourvu d'une décoration évoquant le jardin, au moins sur le côté (couvercle supérieur 8) qui se trouve en face des cavités (2).

7. Conditionnement selon l'une des revendications précédentes, dans lequel le boîtier (3) est plastifié.

8. Conditionnement selon l'une des revendications précédentes, dans lequel ledit élément rapporté (1) est imperméable à l'eau au moins autour des cavités (2) qui sont scellées à l'aide de couvercles (4) reliés audit élément (1) et qui forment une partie au moins du couvercle apte à être ouvert (12).

9. Conditionnement selon l'une des revendications précédentes, dans lequel le produit végétal consiste en bulbes de fleurs.
